# EUROPÄISCHE PATENTANMELDUNG

(11) **EP 0 751 312 A2**
(43) Veröffentlichungstag der Anmeldung: **02.01.1997**
(21) Anmeldenummer: 96109649.2
(22) Anmeldetag: 15.06.1996
(51) Int. Cl.: F16C 27/06, F04D 29/66

(54) **Baueinheit zum Lagern und Abdichten einer Maschine, insbesondere einer Turbine, Pumpe, eines Lüfters oder eines Propellers**

(30) Priorität: 30.06.1995 DE 19523907
(71) Anmelder: Voith Hydro GmbH, 89522 Heidenheim (DE)
(72) Erfinder: Perfahl, Herbert, 89555 Steinheim (DE)
(74) Vertreter: Weitzel, Wolfgang, Dr.-Ing. Patentanwalt

(57) **Zusammenfassung**

Die Erfindung betrifft eine Baueinheit zum Lagern und Abdichten einer Maschine, insbesondere einer hydraulischen Maschine;
mit einer Lagereinheit zum radialen und axialen Lagern der Maschine an der festen Umgebung, zum Beispiel dem Fundament der Maschine;
mit einer Dichtungseinheit zum Abdichten gegen ein von einem strömenden Medium gebildeten Druckdifferential.

Die Erfindung ist gekennzeichnet durch die folgenden Merkmale:
die Maschine und die Lagereinheit sind in einem weitgehend unveränderlichen radialen Abstand zueinander angeordnet;
die Dichtungseinheit ist radial zwischen der Lagereinheit und der festen Umgebung angeordnet.

## Beschreibung

Die Erfindung betrifft eine Baueinheit zum Lagern und Abdichten einer Maschine, insbesondere einer hydraulischen Maschine, beispielsweise einer Kaplanturbine, einer Francisturbine oder eines Zykloidalpropellers.

Die Maschinen müssen derart gelagert werden, daß die Lagerung sowohl axiale als auch radiale Kräfte aufnimmt. Dabei umschließen die betreffenden Lager einerseits die Maschine, während sie andererseits selbst umschlossen sind von Teilen der festen Umgebung, beispielsweise vom Maschinengestell. Dabei verbleibt zwischen der Mantelfläche der Maschine und der Leibung des Lagers ein Ringspalt.

Auf der einen Seite einer solchen Baueinheit - in Axrichtung der Maschine gesehen - herrscht ein gewisser Überdruck, während auf der anderen Seite Atmosphärendruck oder gar Unterdruck herrschen kann - siehe beispielsweise eine Kaplanturbine. Dies bedeutet, daß die Baueinheit einem erheblichen Druckdifferential ausgesetzt ist. Es muß aber verhindert werden, daß Flüssigkeit, beispielsweise Wasser, durch den genannten Ringspalt hindurchdringt. Deswegen bedarf es einer Abdichtung. Hierzu werden Dichtungseinheiten der unterschiedlichsten Systeme verwendet, die an wenigsten einer Seite der Baueinheit vorgesehen werden, beispielsweise Lippendichtungen, Labyrinthdichtungen, usw.

Ein besonderes Erschwernis beim Abdichten einer hydraulischen Maschine ergibt sich zum einen daraus, daß die Druckdifferentiale groß sind. Ein weiteres Erschwernis kommt noch hinzu. Dieses besteht darin, daß die Maschine beim Betrieb Vibrationen unterliegt, die zu radialen Auslenkungen führen. Da das Maschinenfundament aber entweder keine Radialauslenkungen erfährt, oder geringere Radialauslenkungen als die Maschine, oder Radialauslenkungen gemäß anderer Schwingungsformen, als diejenigen der Maschine, kommt es zu einer ständigen Änderung der Weite des genannten Ringspaltes zwischen der Maschine und dem betreffenden Elementen der festen Umgebung. Dies kann dazu führen, daß der Ringspalt an manchen Stellen und während mancher Zeitpunkte den Wert Null annimmt, was bedeutet, daß die Mantelfläche der Maschine an der Lagerfläche schleift. Dies ist in hohem Maße unerwünscht. Deswegen muß der Ringspalt eine gewisse minimale Weite aufweisen. Damit wird aber die Abdichtung des Ringspaltes gegen das genannte Druckdifferential nochmals erschwert.

Der Erfindung liegt die Aufgabe zugrunde, eine Baueinheit gemäß dem Oberbegriff von Anspruch 1 derart zu gestalten, daß sowohl eine perfekte Lagerung der Maschine, als auch eine perfekte Abdichtung gegen ein fließfähiges Medium erzielt wird.

Diese Aufgabe wird durch die kennzeichnenden Merkmale von Anspruch 1 gelöst.

Der Erfinder hat hiermit einen verblüffend einfachen Weg gefunden, das Problem zu lösen. Er hat nämlich durch die erfindungsgemäßen Maßnahmen das Problem des Lagerns einerseits und das Problem des Abdichtens andererseits getrennt. Hierdurch kann man bezüglich der Konstruktion der Lagereinheit einzig und allein auf eine gute Lagerung bedacht sein, ohne sich um die Dichtung kümmern zu müssen.

Die Erfindung ist anhand der Zeichnungen erläutert. Darin ist im einzelnen folgendes dargestellt:

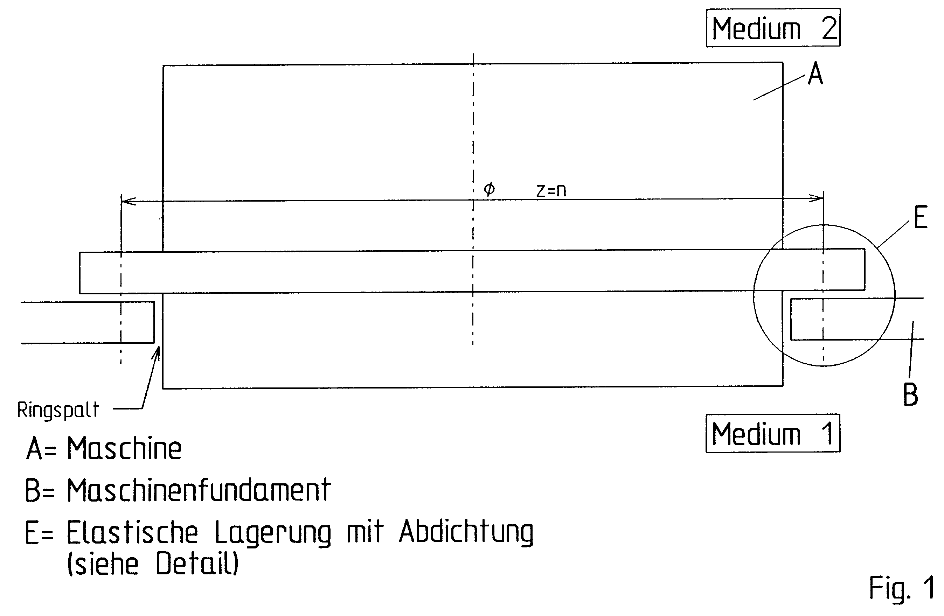

- Figur 1: veranschaulicht in einer schematischen Darstellung eine solche Baueinheit.
A: Maschine
B: Maschinenfundament
E: Elastische Lagerung mit Abdichtung (siehe Detail)

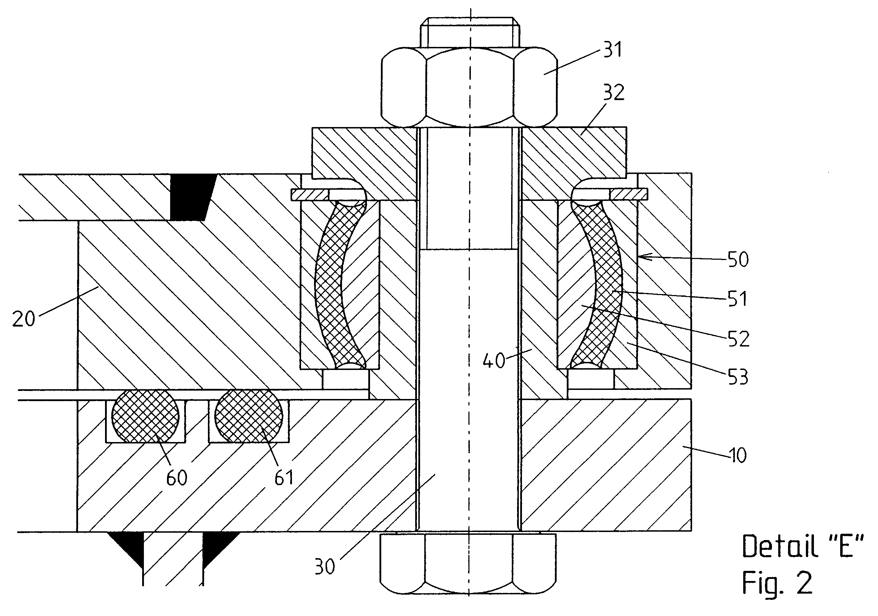

Die Lagerung der Maschine gegenüber dem Fundament ist mittels einer Baugruppe vorgenommen, die in Figur 2 vergrößert dargestellt ist - siehe Detail E in Figur 1. Es ist eine Vielzahl von Baugruppen gemäß Figur 2 vorgesehen, die sich kranzförmig um die Maschine herum erstrecken. Diese Baugruppen E sind im einzelnen jeweils wie folgt aufgebaut:

Ein unterer Flansch 10 ist Bestandteil des Maschinenfundamentes, während ein oberer Flansch 20 Bestandteil des Hauptgehäuses der Maschine ist. Die Flansche 10 und 20 sind jeweils durch eine Schraube 30 mit Mutter 31 und Scheibe 32 zusammengehalten. Entscheidendes Element ist ein Gummi-Metall-Element 50. Dieses weist eine Gummimembran 51 auf, die in Metall-Elemente 52, 53 eingebettet ist.

Die Befestigung der Schraube 30 kann mit vollem Moment erfolgen; ihre Vorspannung wird nicht durch ein Setzen der Gummi-Metall-Elemente 50 beeinflußt. Damit wird eine Körperschallübertragung wirksam verhindert.

Die Abdichtung zwischen Flansch 10 und Flansch 20 erfolgt über Dichtelemente 60, 61, deren Nachstellbarkeit größer als die Schwingungsamplituden der elastischen Lagerung ist.

Das Dämpfungsverhalten der elastischen Lagerung mittels der Gummi-Metall-Elemente 50 läßt sich durch Art der Konstruktion und Anzahl der Gummi-Metall-Elemente beliebig verändern. Weit über die Betriebsbelastung hinausgehende Kräfte werden durch die Scheiben 32 abgefangen.

Durch die Erfindung werden somit die erforderlichen Funktionen auf verschiedene Maschinenelemente aufgeteilt: Die Abdichtung zwischen den Medien erfolgt durch die Dichtelemente 60 und 61.

Radialschwingungen werden aufgenommen durch die Baugruppen E, die wiederum keine Dichtfunktion zwischen dem z.B. wassererfüllten und dem lufterfüllten Raum ausüben müssen.

Die Abdichtung erfolgt über Dichtelemente 60 und 61. Die Nachstellbarkeit der Dichtelemente 60 und 61 ist größer als die Schwingungsamplituden der elastischen Lagerung mittels der Gummi-Metall-Elemente 50. Das Dämpfungsverhalten der elastischen Lagerung E kann durch entsprechende Konstruktion und Anzahl der Gummi-Metall-Elemente 50 beliebig verändert werden. Weit über der Betriebsbelastung liegende äußere Kräfte werden durch Scheiben 32 absorbiert.

## Patentansprüche

1. Baueinheit zum Lagern und Abdichten einer Maschine, insbesondere einer hydraulischen Maschine;
1.1 mit einer Lagereinheit zum radialen und axialen Lagern der Maschine an der festen Umgebung, zum Beispiel dem Fundament der Maschine;
1.2 mit einer Dichtungseinheit zum Abdichten gegen ein von einem strömenden Medium gebildeten Druckdifferential; gekennzeichnet durch die folgenden Merkmale:
1.3 die Maschine und die Lagereinheit sind in einem weitgehend unveränderlichen radialen Abstand zueinander angeordnet;
1.4 die Dichtungseinheit ist radial zwischen der Lagereinheit und der festen Umgebung angeordnet.

2. Baueinheit nach Anspruch 1, dadurch gekennzeichnet, daß die Lagereinheit Gummi-Metall-Elemente umfaßt

3. Baueinheit nach Anspruch 2, dadurch gekennzeichnet, daß die Gummi-Metall-Elemente mittels Schrauben und Muttern am Maschinenfundament befestigt sind.
